# EUROPÄISCHE PATENTSCHRIFT

(11) **EP 4 308 485 B1**
(45) Veröffentlichungstag und Bekanntmachung des Hinweises auf die Patenterteilung: **21.01.2026**
(21) Anmeldenummer: 22714420.1
(22) Anmeldetag: 14.03.2022
(51) Int. Cl.: B65G 11/20

(54) **FÖRDERANORDNUNG**
CONVEYOR ARRANGEMENT
AGENCEMENT DE TRANSPORTEUR

(30) Priorität: 15.03.2021 DE 102021106255
(43) Veröffentlichungstag der Anmeldung: 24.01.2024
(73) Patentinhaber: Interroll Holding AG, 6592 Sant'Antonino (CH)
(72) Erfinder: GLEMBA, Lidiia, 41836 Hückelhoven (DE); EISINGER, Thomas, 41836 Hückelhoven (DE); PURPUS, Fabian, 41836 Hückelhoven (DE); FUNK, Florian, 41836 Hückelhoven (DE); FRIEDRICHS, Jens, 41836 Hückelhoven (DE)
(74) Vertreter: Kohlhof, Stephan
(86) Internationale Anmeldenummer: PCT/EP2022/056449
(87) Internationale Veröffentlichungsnummer: WO 2022/194736

(56) Entgegenhaltungen:
- WO-A1-2019/016591
- WO-A2-03/043428
- CN-A- 108 001 934
- DE-A1- 102013 111 788
- DE-A1- 19 724 194
- DE-A1- 2 627 511

## Beschreibung

Die Erfindung betrifft eine Förderanordnung.

An Endstellen in einem Paketverteilzentrum erfolgt die Verladung von Paketen in Lieferwagen, die bestimmten Zielregionen zugeordnet sind. Über einen Sortierer, beispielsweise einen Quergurtsorter (z.B. WO 2019/ 002 048 A1) werden die Pakete den einzelnen Endstellen mit hoher Ausgangsgeschwindigkeit sortiert zugeführt. Zur Überwindung von Höhenunterschieden werden zwischen dem Sortierer und der Endstelle geneigte Rutschen verwendet, in denen die Pakete gravitationsbedingt entlang rutschen. Aufgrund der hohen Geschwindigkeiten der Pakete kann es zu Beschädigungen an den Paketen kommen. Zudem kommt es häufig zu Paketstaus in den Rutschen, die manuell gelöst werden.

Die EP 1 868 923 B1 offenbart eine Endstellenrutsche. Dabei sind mindestens zwei quer zur Förderrichtung der Rutsche verlaufende, angetriebene Rollen vorgesehen. Die Rollen werden mit unterschiedlicher Geschwindigkeit angetrieben. Die Geschwindigkeit einer Rolle ist umso höher gegenüber der jeweils anderen Rolle gewählt, je näher die jeweilige Rolle an der Ausgangsseite der Endstellenrutsche liegt.

Die EP 0 706 960 B1 offenbart eine Endstelle, vor der ein Taktband angeordnet ist, an welche die fördernde Gegenstände getaktet abgegeben werden. Die zu fördernden Gegenstände können so schonend hintereinander gefördert werden.

Die DE 10 2010 005 267 A1 offenbart eine Fördereinrichtung für Stückgut mit einem Förderkopf, der einen Aufnahmebereich zum manuellen Auflegen von Stückgut aufweist. Der Förderkopf kann im Raum verlagert werden.

EP 2 922 775 B1 offenbart eine Bremsrolle, auf Basis des magnetischen Wirbelstroms. Diese Bremse kann ein Fördergut abbremsen, allerdings nicht im Stillstand festhalten.

Aus der WO 03/043428A2 ist eine Förderanordnung gemäß dem Oberbegriff des Anspruchs 1 bekannt.

Es ist Aufgabe der vorliegenden Erfindung, eine verbesserte Förderanordnung bereitzustellen. Dies wird gelöst durch eine Vorrichtung sowie die Verwendung nach den Hauptansprüchen; Ausgestaltungen sind Gegenstand der Unteransprüche sowie der Beschreibung.

Die beanspruchte Förderanordnung zeichnet sich dadurch aus, dass die Fördergüter am Übergabebereich mit geringer Geschwindigkeit ankommen und damit die Gefahr von Beschädigungen vermindert ist. Dennoch ist ein sicherer Zugang zu oben liegenden Bereichen des Rutschenbereichs sicher für eine Person möglich, um etwaige Defekte beheben zu können. Dabei kann ein obenliegender Sortierer weiterbetrieben werden, da der Zugang von den Seiten der Endstelle erfolgt.

Die Erfindung ist insbesondere eingerichtet für die Förderung von Postpaketen als Fördergut und/oder für die Förderung von Polybags als Fördergut. Polybags sind dabei mit Folie verpackte Fördergüter ohne starre Außenkontur.

Ein für die Verwendung geeignetes Fördergut, insbesondere Postpaket, hat ein Gewicht von 20kg, was die Verwendung leichterer und schwererer Pakte nicht ausschließt. Insbesondere ist die Förderanordnung eingerichtet, ein Fördergut, insbesondere Postpaket, von 50 kg zu fördern. Zudem kann es auch möglich sein, sog. Polybags zu fördern, also Fördergüter, die in einer Folie verpackt sind, wie beispielsweise Kleidungsstücke.

Das Gleitbett ist eingerichtet, eine punktuelle Gewichtslast von zumindest. 100 kg aufzunehmen.

Die Erfindung wird anhand der Figuren nachfolgend näher erläutert; hierin zeigt:
- Figur 1: schematisch den Aufbau einer Förderanordnung in Seitenansicht;
- Figur 2: schematisch eine Ausgestaltung der Förderanordnung in Seitenansicht im Förderbetriebszustand;
- Figur 3: schematisch die Ausgestaltung Förderanordnung nach Figur 2 in Seitenansicht im Wartungsbetriebszustand;
- Figur 4: eine Prinzipdarstellung einer Ausgestaltung einer Bandbremse;
- Figur 5: eine Prinzipdarstellung einer weiteren Ausgestaltung einer Bandbremse.

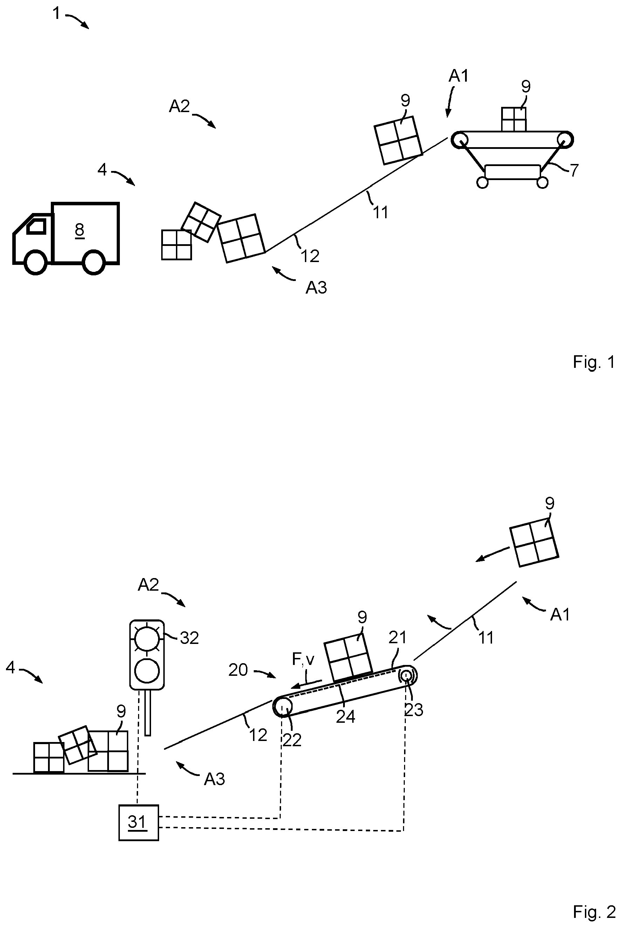

Figur 1 zeigt eine erfindungsgemäße Förderanordnung 1. Ein Fördergut 9, beispielsweise ein Postpaket, wird von einem Sortierer 7 transportiert. Vom Sortierer 7 gelangt das Fördergut zu einem Übernahmebereich A1, an dem sich ein Rutschenbereich A2 anschließt. Im Rutschenbereich gleitet das Fördergut 9 zumindest abschnittsweise nach unten, um an einem Übergabebereich A3 zu einer Endstelle 4 zu gelangen. An der Endstelle 4 wird das Fördergut zumindest kurzzeitig gelagert, um von dort in einen Lieferwagen 8, einen Rollcontainer oder eine Gitterbox verbracht zu werden.

Figur 2 zeigt Details des Rutschenbereichs A2 mit zwei separaten Rutschen 11, 12, die in Förderrichtung F hintereinander angeordnet sind. Am Rutschenbereich A2 werden teils sehr große Höhendifferenzen überwunden. Aufgrund einer Raumoptimierung ist der Rutschenbereich A2 daher sehr steil, was zu einer großen Beschleunigung des Förderguts 9 führt. Zudem wird das Fördergut mit einer Geschwindigkeit von bis zu 3 m/s von dem Sortierer 7 bereitgestellt. Dies könnte zu Beschädigungen am Fördergut führen, insbesondere beim Auftreffen in der Endstelle 4. Um das Fördergut 9 durch eine daraus resultierende große Geschwindigkeit nicht zu beschädigen ist in Förderrichtung F nachgelagert zur ersten Rutsche 11 ein Bandförderer angerordnet.

Der Bandförderer 20 weist ein Förderband 21auf, auf dem das Fördergut zumindest abschnittsweise im Rutschenbereich A2 gefördert wird. Der Bandförderer 20 weist ein Förderband 21 auf, auf welchem das Fördergut 9 zur Anlage kommt. Das Förderband 21 ist um zwei Umlenkrollen 26 gespannt. In einem Förderbetriebszustand wird das Förderband 21 mit einer Transportgeschwindigkeit betrieben, die insbesondere geringer als 1,5m/s ist und insbesondere etwa zwischen 0,2 und 0,5 m/s beträgt. Zum Antreiben des Förderbandes 21 ist ein Bandantrieb 22 vorgesehen, beispielsweise ein Trommelmotor.

Ein auf das Förderband 21 auftreffendes Fördergut 9 wird dabei von dem Förderband 21 abgebremst, sofern das Fördergut 9 eine zu hohe Geschwindigkeit aufweist. Gleichzeitig ist sichergestellt, dass das Fördergut 9 zumindest mit der Transportgeschwindigkeit weitergefördert wird. Eine alternativ dazu mögliche statische Bremsvorrichtung hätte stets den Nachteil, dass das Fördergut vollständig abgebremst wird. Der Bandförderer kann somit sicherstellen, dass das Fördergut 9 am Ende des Bandförderers die definierte Transportgeschwindigkeit (inkl. eines Toleranzbandes) aufweist.

An den Bandförderer 20 kann sich optional eine zweite Rutsche 12 anschließen, über die das Fördergut 9 von dem Bandförderer 20 schließlich weiter zur Endstelle 4 gelangt. Die Neigung der zweiten Rutsche 12 kann geringer sein als die Neigung der ersten Rutsche 11. Es ist möglich, dass sich an die zweite Rutsche ein oder mehrere weitere Bandförderer anschließen.

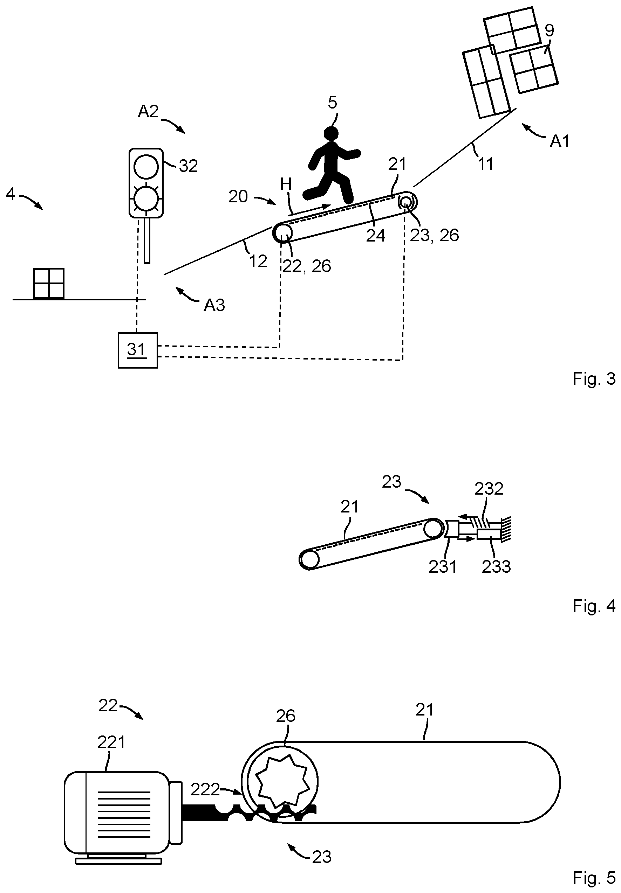

Figur 3 zeigt, dass aufgrund der Raumoptimierungen der Rutschenbereich A2 in seiner Breite (Richtung in die Bildebene hinein) beschränkt. Gelangt ein sehr großes Fördergut 9 in den Rutschenbereich A2, so kann es zu Verklemmungen kommen, die sich nicht selbstständig auflösen können. Verklemmungen entstehen häufig am Übernahmebereich A1. Um diese Verklemmung zu lösen steigt eine Person 5 von der Endstelle 4 in Richtung Übernahmebereich A1. Um zu verhindern, dass die verklemmten Pakete auf die Person herunterfallen kann dies Person das Lösen auch von der Nachbarrutsche vornehmen.

Ein Zugang aus der anderen Richtung (vom Sortierer 7) ist in der Regel nicht möglich, da der Sortierer 7 bei einer Funktionsunfähigkeit einzelner Endstellen weiterbetrieben wird. Um das Betreten des Rutschenbereichs A2 zu ermöglichen sind folgende Vorkehrungen bevorzugt:

Der Bandförderer 20 weist ein Gleitbett 24 für das Förderband 21 auf. Damit die Person den Rutschenbereich A2 sicher von der Endstelle 4 in Richtung Übernahmebereich A1 betreten kann weist das Gleitbett 24 eine Tragfähigkeit von zumindest 100 kg auf.

Der Bandförderer 20 weist eine Haltebremse 23 auf. Die Haltebremse 23 ist eingerichtet, in einem Wartungsbetriebszustand das Förderband 21 im Stillstand zu halten, selbst für den Fall, dass die Person den Bandförderer 20 betritt. Unter Beachtung des Gewichts der Person kann unter Berücksichtigung der Neigung eine dazu minimale erforderliche Haltekraft H ermittelt werden. Bei einem Neigungswinkel von 20° (nicht gezeigt) ergibt sich eine minimale Haltekraft H von etwa 300N für das Förderband 21, die durch den Bandförderer 20 bereitzustellen ist.

Eine Steuerung 31 ist dazu vorgesehen, den Bandförderer 20 anzusteuern und insbesondere Steuerbefehle an den Bandantrieb und die Haltebremse 23 auszugeben. Eine Ausgabevorrichtung 32, beispielsweise eine Ampel, ist vorgesehen, um der Person anzuzeigen, dass die Person 5 den Rutschenbereich A2 betreten kann.

Figur 4 zeigt beispielhaft die Funktionsweise der Haltebremse 23 in einer Ausgestaltung. Dabei ist ein Bremselement 231 vorgesehen, welches über eine reibende Verbindung eine Bremskraft zumindest mittelbar auf das Förderband 21 aufbringen kann. Ein Kraftspeicher 232, beispielsweise eine Feder, stellt die Bremskraft für das Bremselement 231 bereit. Ein Freigabeaktuator 233 ist vorgesehen, um im Förderbetriebszustand dem Kraftspeicher entgegenzuwirken und so die Haltebremse 23 inaktiv zu halten. Zur Einleitung des Wartungsbetriebszustandes wird der Freigabeaktuator 233 stromlos geschaltet (dies kann auch ungewollt durch einen Stromausfall geschehen). Die Gegenkraft zum Kraftspeicher 232 entfällt und die Haltebremse 23 hält das Förderband fest. Das Bremselement 231 kann außerhalb oder innerhalb der Umlenkrolle 26 angeordnet sein.

Figur 5 zeigt die Funktionsweise der Haltebremse 23 in einer Ausgestaltung. Der Bandantrieb 22 umfasst einen Antriebsmotor 221, der über ein selbsthemmendes Getriebe 222 mit der Umlenkrolle 26 antriebsverbunden ist. Das selbsthemmende Getriebe 222 kann ein Schneckengetriebe sein. Der Bandantrieb 22 stellt zugleich die Haltebremse 23 dar. Das selbsthemmende Getriebe 222 verhindert hierbei eine Umkehrung der Antriebsrichtung.

### Bezugszeichenliste

- 1: Förderanordnung
- 4: Endstelle
- 5: Person
- 7: Sortierer, Zuführvorrichtung
- 8: Lieferwagen
- 9: Fördergut (Postpaket)

- 11: erste Rutsche
- 12: zweite Rutsche
- 20: Bandförderer
- 21: Förderband
- 22: Bandantrieb
- 221: Antriebsmotor
- 222: Getriebe
- 23: Haltebremse
- 231: Bremselement
- 232: Kraftspeicher
- 233: Freigabeaktuator
- 24: Gleitbett
- 26: Umlenkrolle
- 31: elektronische Steuerung
- 32: Ausgabevorrichtung

- A1: Übernahmebereich
- A2: Rutschenbereich
- A3: Übergabebereich
- F: Förderrichtung
- H: Haltekraft
- v: Fördergeschwindigkeit

## Patentansprüche

1. Förderanordnung (1),
umfassend einen Bandförderer (20) mit einem Förderband (21), wobei die Förderanordnung einen Rutschenbereich
- zur Übernahme eines Förderguts (9), insbesondere eines Postpakets (9), an einem Übernahmebereich (A1), insbesondere von einer vorgelagerten Zuführvorrichtung (7),
- zur Übergabe des Förderguts (9) an einem Übergabebereich (A3), insbesondere an eine Endstelle (4);
- zur Überführung des Förderguts (9) im Rutschenbereich (A2) vom Übernahmebereich (A1) an den Übergabebereich (A3),
aufweist, wobei der Rutschenbereich (A2) zumindest eine in Förderrichtung (F) nach unten geneigte Rutsche (11, 12) umfasst, an dem das Fördergut (9) gravitationsbedingt gleitend befördert wird,
dass der Rutschenbereich (A2) den Bandförderer (20) mit dem Förderband (21) umfasst,
**dadurch gekennzeichnet, dass** der Bandförderer (20) eine Bremse (23) aufweist und
dass die Bremse eine Haltebremse (23) ist, die eingerichtet ist, das Förderband (21) in einer Ruhestellung festzuhalten.

2. Förderanordnung (1) nach einem der vorherigen Ansprüche,
**dadurch gekennzeichnet,**
**dass** der Bandförderer (20) eingerichtet ist, das Fördergut (9) abzubremsen.

3. Förderanordnung (1) nach einem der vorherigen Ansprüche,
**dadurch gekennzeichnet,**
**dass** der Bandförderer (20) in Förderrichtung (F) hinter der Rutsche (11) oder hinter einer der Rutschen (11, 12) angeordnet ist.

4. Förderanordnung (1) nach einem der vorherigen Ansprüche,
**dadurch gekennzeichnet,**
**dass** der Bandförderer (20) eingerichtet ist,
- in einem Förderbetriebszustand das Förderband (21) mit einer definierten Fördergeschwindigkeit (v) anzutreiben;
- in einem Wartungsbetriebszustand das Förderband (21) in einer Ruhestellung zu halten.

5. Förderanordnung (1) nach einem der vorherigen Ansprüche,
**dadurch gekennzeichnet,**
**dass** bei einer Stromlosschaltung des Bandförderers (20) automatisch die Haltebremse (23) aktiviert wird,
insbesondere dass der Bandförderer (20) automatisch in den Wartungsbetriebszustand überführt wird.

6. Förderanordnung (1) nach einem der vorherigen Ansprüche,
**gekennzeichnet durch**,
eine Ausgabevorrichtung (32), die eingerichtet ist, einer Person (5) einen Zustand der Haltebremse (23) anzuzeigen, insbesondere ob die Haltebremse (23) aktiviert ist und/oder ob die Förderanordnung im Wartungsbetriebszustand ist.

7. Förderanordnung (1) nach einem der vorherigen Ansprüche,
umfassend ferner eine Zuführvorrichtung (7) ) und/oder eine Endstelle (4).

8. Förderanordnung (1) nach dem vorherigen Anspruch,
wobei die Zuführvorrichtung (7) ein Sortierer ist,
wobei der Sortierer (7) eingerichtet ist, eine Vielzahl von Fördergütern am Übernahmebereich (A1) entlang zu fördern,
wobei der Sortierer (7) eingerichtet ist, dass einzelne der Fördergüter (9) am Eingangsbereich (A1) vorbei gefördert werden, ohne in den Eingangsbereich (A1) beaufschlagt zu werden, und
wobei der Sortierer (7) eingerichtet ist, dass einzelne der Fördergüter (9) entlang des Eingangsbereichs (A1) gefördert werden, und dabei selektiv in den Eingangsbereich (A1) beaufschlagt werden.

9. Verwendung einer Förderanordnung (1),
die Förderanordnung (1) umfasst einen Rutschenbereich
- zur Übernahme eines Förderguts (9), insbesondere eines Postpakets (9), an einem Übernahmebereich (A1), insbesondere von einer vorgelagerten Zuführvorrichtung (7),
- zur Übergabe des Förderguts (9) an einem Übergabebereich (A3), insbesondere an eine Endstelle (4);
- zur Überführung des Förderguts (9) in dem Rutschenbereich (A2) vom Übernahmebereich (A1) an den Übergabebereich (A3),
wobei der Rutschenbereich (A2) zumindest eine in Förderrichtung (F) nach unten geneigte Rutsche (11, 12) umfasst, an dem das Fördergut (9) gravitationsbedingt gleitend befördert wird,
wobei der Rutschenbereich (A2) einen Bandförderer (20) mit einem Förderband (21) und einer Haltebremse (23) zum Festhalten des Förderbands (21) in einer Ruhestellung umfasst,
wobei
- zur Behebung eines Defekts im oder vor dem Rutschenbereich (A2) die Förderanordnung (1) in einen Wartungsbetriebszustand überführt wird, in der die Haltebremse (23) aktiviert ist,
- anschließend eine Person (5) zur manuellen Behebung des Defekts über den Bandförderer (20) sich zum Ort des Defekts begibt,
- nach Behebung des Defekts die Haltebremse (23) gelöst wird,
wobei der Zustand der Haltebremse (23) der Person (5) durch eine Ausgabevorrichtung (32) angezeigt wird.

10. Verwendung einer Förderanordnung (1) nach dem vorherigen Anspruch,
**dadurch gekennzeichnet,**
**dass** der Zustand der Haltebremse durch eine elektronische Steuerung (31) angesteuert wird.

11. Verwendung einer Förderanordnung (1) nach einem der Ansprüche 9 oder 10, wobei eine in Förderrichtung (F) oberhalb des Rutschenbereichs (A2) angeordnete Zuführvorrichtung (7), insbesondere ein Sortierer (7), weiter betrieben wird, während
- der Defekt behoben wird und/oder
- wenn die Förderanordnung (1) im Wartungsbetriebszustand ist und/oder
- wenn die Haltebremse (23) aktiviert ist.

## Claims

1. A conveying device (1),
comprising a belt conveyor (20) with a conveyor belt (21), wherein the conveying device has a slide area
- for receiving a conveyed material (9), in particular a postal parcel (9) at an acceptance area (A1), in particular from an upstream feeding device (7),
- for handing over the conveyed material (9) at a handover area (A3), in particular at a terminal station (4);
- for transferring the conveyed material (9) in the slide area (A2) from the acceptance area (A1) to the handover area (A3),
wherein the slide area (A2) comprises at least one slide (11, 12) downwardly inclined in the conveying direction (F), on which the conveyed material (9) is smoothly transported by gravity,
that the slide area (A2) comprises the belt conveyor (20) with the conveyor belt (21),
**characterized in that**
the belt conveyor has a brake (23) and that
the brake is a holding brake (23), which is set up to hold the conveyor belt (21) in a resting position.

2. The conveying device (1) according to one of the preceding claims,
**characterized in that**
the belt conveyor (20) is set up to brake the conveyed material (9).

3. The conveying device (1) according to one of the preceding claims,
**characterized in that**
the belt conveyor (20) is arranged behind the slide (11) or behind one of the slides (11, 12) in the conveying direction (F).

4. The conveying device (1) according to one of the preceding claims,
**characterized in that**
the belt conveyor (20) is set up
- to drive the conveyor belt (21) with a defined conveying velocity (v) in a conveyor operation mode;
- to keep the conveyor belt (21) in a resting position in a maintenance operation mode.

5. The conveying device (1) according to one of the preceding claims,
**characterized in that**
the holding brake (23) is automatically activated when power to the belt conveyor (20) is deenergized,
in particular that the belt conveyor (20) is automatically switched to the maintenance operation mode.

6. The conveying device (1) according to one of the preceding claims,
**characterized by**
an output device (32) set up to show a person (5) a mode of the holding brake (23), in particular whether the holding brake (23) is activated and/or whether the conveying device is in the maintenance operation mode.

7. The conveying device (1) according to one of the preceding claims,
further comprising a feeding device (7) and/or a terminal station (4).

8. The conveying device (1) according to the preceding claim,
wherein the feeding device (7) is a sorter,
wherein the sorter (7) is set up to convey a plurality of conveyed materials along the acceptance area (A1),
wherein the sorter (7) is set up to convey individual conveyed materials (9) past the entrance area (A1), without being applied to the entrance area (A1), and
wherein the sorter (7) is set up to convey individual conveyed materials (9) along the entrance area (A1), and in the process selectively apply them to the entrance area (A1).

9. Use of a conveying device (1),
the conveying device (1) comprises a slide area
- for receiving a conveyed material (9), in particular a postal parcel (9), at an acceptance area (A1), in particular from an upstream feeding device (7),
- for handing over the conveyed material (9) at a handover area (A3), in particular at a terminal station (4);
- for transferring the conveyed material (9) in the slide area (A2) from the acceptance area (A1) to the handover area (A3),
wherein the slide area (A2) comprises at least one slide (11, 12) downwardly inclined in the conveying direction (F), on which the conveyed material (9) is smoothly transported by gravity,
wherein the slide area (A2) comprises a belt conveyor (20) with a conveyor belt (21),
and a holding brake (23) for holding the conveyor belt (21) in a resting position, wherein
- in order to eliminate a defect in or before the slide area (A2), the conveying device (1) is switched to a maintenance operation mode in which the holding brake (23) is activated,
- a person (5) then makes their way to the location of the defect to manually eliminate the defect via the belt conveyor (20),
- the holding brake (23) is released after the defect has been eliminated, wherein the mode of the holding brake (23) is shown to the person (5) by an output device (32).

10. Use of a conveying device (1) according to the preceding claim,
**characterized in that**
the mode of the holding brake is actuated by an electronic controller (31).

11. Use of a conveying device (1) according to one of claims 9 or 10,
wherein a feeding device (7), in particular a sorter (7), arranged above the slide area (A2) in the conveying direction (F) is further operated, while
- the defect is being eliminated and/or
- if the conveying device (1) is in the maintenance operation mode and/or
- if the holding brake (23) is activated.

## Revendications

1. Système de transport (1),
comprenant un convoyeur à bande (20) avec une bande transporteuse (21), sachant que le système de transport comporte une zone de glissement
- pour la prise en charge d'un bien à transporter (9), en particulier d'un paquet postal (9), sur une zone de prise en charge (A1), en particulier par un dispositif d'alimentation (7) logé en amont,
- pour la prise en charge du bien à transporter (9) sur une zone de prise en charge (A3), en particulier à un poste d'extrémité (4),
- pour le transfert du bien à transporter (9) dans la zone de glissement (A2) depuis la zone de prise en charge (A1) à la zone de remise (A3),
sachant que la zone de glissement (A2) comprend au moins une glissière (11, 12) inclinée vers le bas dans une direction de transport (F), sur laquelle le bien à transporter (9) est transporté glissant par gravitation,
que la zone de glissement (A2) comprend le convoyeur à bande (20) avec la bande transporteuse (21),
**caractérisé en ce que**
le convoyeur à bande comporte un frein (23) et
**en ce que** le frein est un frein de retenue (23), qui est agencé pour maintenir la bande transporteuse (21) dans une position de repos.

2. Système de transport (1) selon la revendication précédente,
**caractérisé en ce que**
le convoyeur à bande (20) est agencé pour freiner le bien à transporter (9).

3. Système de transport (1) selon l'une quelconque des revendications précédentes, **caractérisé en ce que**
le convoyeur à bande (20) est disposé dans la direction du transport (F) derrière la glissière (11) ou derrière une des glissières (11, 12).

4. Système de transport (1) selon l'une quelconque des revendications précédentes, **caractérisé en ce que**
le convoyeur à bande (20) est agencé,
- pour entraîner dans un état de fonctionnement de transport le bien à transporter (21) à une vitesse de transport (v) définie,
- pour maintenir dans une position de repos la bande transporteuse (21) dans un état de maintenance.

5. Système de transport (1) selon l'une quelconque des revendications précédentes, **caractérisé en ce que**
le frein de retenue (23) est automatiquement activé en cas de coupure de courant du convoyeur à bande (20),
en particulier, **en ce que** le convoyeur à bande (20) est automatiquement transféré dans l'état de maintenance.

6. Système de transport (1) selon l'une quelconque des revendications précédentes, **caractérisé par**
un dispositif de sortie (32), qui est agencé pour afficher à une personne (5) un état du frein de retenue (23), en particulier, si le frein de retenue (23) est activé et/ou si le système de transport est en état de maintenance.

7. Système de transport (1) selon l'une quelconque des revendications précédentes, comprenant en plus un dispositif d'alimentation (7) et/ou un poste d'extrémité (4).

8. Système de transport (1) selon la revendication précédente,
sachant que le dispositif d'alimentation (7) est un trieur,
sachant que le trieur (7) est agencé pour transporter une pluralité de biens à transporter le long de la zone de prise en charge (A1),
sachant que le trieur (7) est agencé pour que les biens à transporter (9) soient transportés passant individuellement sur la zone d'entrée (A1) sans être chargés dans la zone d'entrée (A1), et
sachant que le trieur (7) est agencé de telle sorte que les biens à transporter (9) soient transportés individuellement le long de la zone d'entrée (A1) et soient à cet effet sélectivement chargés dans la zone d'entrée (A1).

9. Utilisation d'un système de transport (1),
le système de transport (1) comprend une zone de glissement
- pour la prise en charge d'un bien à transporter (9), en particulier d'un paquet postal (9), sur une zone de prise en charge (A1), en particulier par un dispositif d'alimentation (7) logé en amont,
- pour la prise en charge du bien à transporter (9) sur une zone de prise en charge (A3), en particulier à un poste d'extrémité (4),
- pour le transfert du bien à transporter (9) dans la zone de glissement (A2) de la zone de prise en charge (A1) sur la zone de remise (A3),
sachant que la zone de glissement (A2) comprend au moins une glissière (11, 12) dans la direction du transport (F) inclinée vers le bas sur laquelle le bien à transporter (9) est transporté en glissant par gravitation,
sachant que la zone de glissement (A2) comprend un convoyeur à bande (20) avec une bande transporteuse (21)
et un frein de retenue (23) pour maintenir la bande transporteuse (21) dans une position de repos,
sachant que
- pour éliminer un défaut dans ou avant la zone de glissement (A2), le système de transport (1) est transféré dans un état de maintenance dans lequel le frein de retenue (23) est activé,
- une personne (5) destinée à l'élimination manuelle du défaut sur le convoyeur à bande (20) se rend ensuite à l'endroit du défaut,
- après élimination du défaut, le frein de retenue (23) est débloqué, sachant que l'état du frein de retenue (23) est affiché à la personne (5) par un dispositif de sortie (32).

10. Utilisation d'un système de transport (1) selon la revendication précédente, **caractérisé en ce que**
l'état du frein de retenue est activé par une commande électronique (31).

11. Utilisation d'un système de transport (1) selon l'une quelconque des revendications 9 ou 10,
sachant qu'un dispositif d'alimentation (7), en particulier un trieur (7), disposé dans la direction du transport (F) au-dessus de la zone de glissement (A2), est en plus utilisé alors que
- le défaut est éliminé et/ou
- lorsque le système de transport (1) est en état de maintenance et/ou
- lorsque le frein de retenue (23) est activé.
